(19) Europäisches Patentamt

European Patent Office

Office européen des brevets

(11) **EP 0 818 226 B1**

(12) **FASCICULE DE BREVET EUROPEEN**

(45) Date de publication et mention
de la délivrance du brevet:
**01.10.2003 Bulletin 2003/40**

(51) Int Cl.7: **B01D 15/02**

(21) Numéro de dépôt: **97401557.0**

(22) Date de dépôt: **02.07.1997**

(54) **Dispositif de rinçage dans une unité d'adsorption en lit mobile simulé et son utilisation**

Spülvorrichtung in einer Adsorptionseinheit mit simuliertem Wanderbett und deren Verwendung

Flushing device in a simulated moving bed adsorption unit and its use

(84) Etats contractants désignés:
**DE GB IT NL**

(30) Priorité: **11.07.1996 FR 9608839**

(43) Date de publication de la demande:
**14.01.1998 Bulletin 1998/03**

(73) Titulaire: **Institut Français du Pétrole**
**92852 Rueil-Malmaison Cedex (FR)**

(72) Inventeur: **Hotier, Gérard**
**92500 Rueil Malmaison (FR)**

(56) Documents cités:
**WO-A-95/07740        WO-A-96/12542**
**US-A- 3 201 491       US-A- 3 268 605**

## Description

L'invention concerne un dispositif de rinçage dans une unité d'adsorption en lit mobile simulé, à contre-courant ou à co-courant, d'une charge.

Elle s'applique particulièrement à la séparation des hydrocarbures aromatiques à 8 atomes de carbone, notamment pour l'obtention de paraxylène à très haute pureté.

L'art antérieur est illustré par les brevets suivants: US-A-3 201 491, US-A-3 268 605, WO 96 12542 et WO 95 07740.

Dans un procédé de séparation par adsorption en lit mobile simulé, on trouve obligatoirement :

1) un ensemble de lits d'adsorbant (ou de phase fixe) disposés en boucle fermée, le nombre total de lits est compris en général entre trois et vingt-quatre.

2) des moyens de connexion de chacun de ces lits avec les flux alimentant l'unité de séparation tel par exemple solvant(s), charge(s) à séparer, reflux interne.

3) des moyens de connexion de chacun de ces lits avec les flux issus de l'unité de séparation tel que par exemple extrait(s), raffinat(s).

4) des moyens de connexion de chacun des lits avec le lit suivant (dans le sens de la circulation des fluides).

Suivant le type particulier de réalisation, on peut trouver soit un dispositif de recirculation de fluide entre le dernier et le premier lit (pompe ou compresseur), soit un dispositif permettant d'assurer l'interruption du flux entre deux lits successifs (vanne tout ou rien), soit un dispositif permettant de réguler le débit et/ou la pression à l'entrée de chaque lit.

Deux types de réalisations sont disponibles :

1. Chaque lit est contenu dans un récipient indépendant et une ligne le relie au suivant. Dans ce cas il est avantageux de venir raccorder sur cette ligne, une ligne indépendante par flux entrant et sortant. On rangera dans cette classe de réalisation le procédé AROMAX de TORAY Industries qui constitue un exemple de réalisation de grande taille. Bien que les lits individuels soient disposés dans une colonne unique, ils sont séparés par des tôles pleines, l'ensemble du fluide issu de chaque lit est collecté par une ligne qui sort de la colonne et qui y rentre, à nouveau, de manière à alimenter le lit suivant.

De manière plus générale sur les unités de petite taille, il est commode d'isoler chaque lit dans un récipient particulier et de le relier au lit suivant par une ligne.

Dans ce type de réalisation, il est aisé d'utiliser une ligne par flux entrant ou sortant et par lit, ce qui évite tout problème de contamination d'un flux par un autre.

2. Plusieurs lits sont contenus dans un seul récipient ou colonne et chacun des lits est séparé du suivant par un plateau distributeur qui doit remplir quatre fonctions :

- rassembler le fluide collecté à la fin du lit,
- prélever durant certaines phases du cycle une partie de ce fluide, telle que la composition de la partie prélevée soit identique à la composition de l'ensemble du fluide,
- injecter durant certaines phases du cycle un fluide extérieur dans le fluide interne et réaliser un mélange homogène en composition,
- distribuer le fluide à l'entrée du lit suivant.

Selon le procédé PAREX : une vanne décrite dans le brevet US 2.985 589 montre comment il est possible de relier au moins deux flux entrants et deux flux sortants séquentiellement vers chacun des lits contenant l'adsorbant.

Ce brevet montre clairement que chacun des distributeurs est relié par une seule ligne à une vanne qui connecte successivement chaque distributeur à la charge puis à l'extrait, puis au solvant, puis au raffinat.

Cette manière de procéder présente l'inconvénient de faire baisser considérablement les performances du procédé (pureté et rendement) puisque chaque flux se trouve ainsi contaminé par le contenu de la ligne commune au moment où l'on connecte un flux donné à un lit particulier.

A titre purement illustratif, on considère une colonne subdivisée en douze lits et fonctionnant de la manière suivante :

En période n°1 du cycle (qui comprend 12 périodes), le solvant est injecté sur le lit n°1, l'extrait est prélevé du lit n°3, la charge injectée sur le lit n°7 et le raffinat est prélevé du lit n°9. Au début de la seconde période du cycle, les points d'injection et de prélèvement sont décalés d'un lit et l'on trouve le solvant injecté sur le lit n°2, l'extrait prélevé du lit n°4, la charge injectée sur le lit n°8 et le raffinat prélevé du lit n°10. Le cycle se poursuit ainsi jusqu'à la douzième période où le solvant est injecté sur le lit n°12, l'extrait est prélevé du lit n°2, la charge est injectée sur le lit n°6 et le raffinat est prélevé du lit n°8.

A la fin de la première période, la ligne reliant le distributeur n°1 à la vanne assurant la gestion des flux se trouve donc pleine de solvant. Au début de la quatrième période le raffinat est prélevé du lit n°12, donc au moyen de la ligne ayant servi à l'injection de solvant au cours de la période 1. Pendant le temps nécessaire à l'évacuation du volume de cette ligne, on prélève du solvant au lieu de prélever du raffinat. Il en résulte donc une dilution inutile qui se traduit en fin de compte par une surconsommation de solvant donc à un surcoût opératoire. A la fin de la quatrième période, cette ligne se trouve pleine de raffinat. Au cours de la septième période la charge est injectée sur le lit n°1. Pendant un certain temps on repousse du raffinat dans le lit n°1 au lieu d'injecter de la charge. Il en résulte que le paraxylène de la charge subit une dilution par du raffinat. Comme la productivité de l'unité est proportionnelle à la concentration du paraxylène dans la charge, le résultat net est une baisse de productivité. A la fin de la septième période, la ligne se trouve pleine de charge. Au cours de la dixième période, l'extrait est prélevé du lit n°12. Pendant le temps nécessaire au balayage de la ligne, on soutire de la charge au lieu de soutirer de l'extrait. Il en résulte une baisse de pureté très importante, puisque la teneur en paraxylène de la charge est de l'ordre de 20 % (donc 80 % d'impuretés). Cette contamination rend impossible l'obtention de paraxylène de haute pureté. A la fin de la dixième période la ligne se trouve pleine d'extrait. Au début de la première période, le solvant repousse le contenu de la ligne dans l'adsorbeur au début de la zone de désorption du paraxylène (zone 1). Une partie de ce paraxylène va donc rester adsorbée sur la phase fixe, et être relarguée ultérieurement pour partie dans le flux de raffinat. Il en résulte donc une perte de rendement en paraxylène.

En résumé, les contaminations dues à l'emploi d'une ligne commune connectant chacun des quatre flux du procédé à l'entrée du plateau distributeur provoquent une augmentation de la consommation de solvant, une baisse de la productivité, une très forte baisse de la pureté et une baisse du rendement.

Bien qu'il soit connu que dans le procédé PAREX une injection intervienne entre le soutirage d'extrait et l'injection de charge, le seul document publié sur ce sujet concerne l'injection d'un ou de deux reflux internes d'extrait ou de raffinat distillé situés soit entre l'extrait et la charge, soit entre la charge et le raffinat (Brevet US 3 761 533). Le fait de réinjecter de l'extrait ou du solvant entre la charge et l'extrait résout uniquement le problème de la forte baisse de pureté.

Dans le procédé ELUXYL, au lieu d'avoir recours à une seule vanne réalisant l'ensemble des connections entre les différents flux et chacun des lits, on trouve une vanne tout ou rien par flux et par lit.

Bien que chacune de ces vannes soit située au plus près du lit qu'elle dessert, il reste à raccorder chaque distributeur à une vanne de solvant, une vanne d'extrait, une vanne de charge, une vanne de raffinat et éventuellement une vanne de reflux interne.

L'objet de l'invention est de remédier aux inconvénients de l'art antérieur.

De manière plus précise, l'invention concerne un dispositif de rinçage selon la revendication 1.

Le lit mobile peut être à contre courant simulé ou à co-courant simulé. Le désorbant peut être une phase liquide ou une phase supercritique, subcritique ou gazeuse. Dans ces conditions, par pompe de circulation, on entend aussi un compresseur.

Le procédé à lit mobile simulé est décrit dans les brevets suivants : US 2985589, US 4498991, US 5422007, EP-B-531191 incorporés comme références.

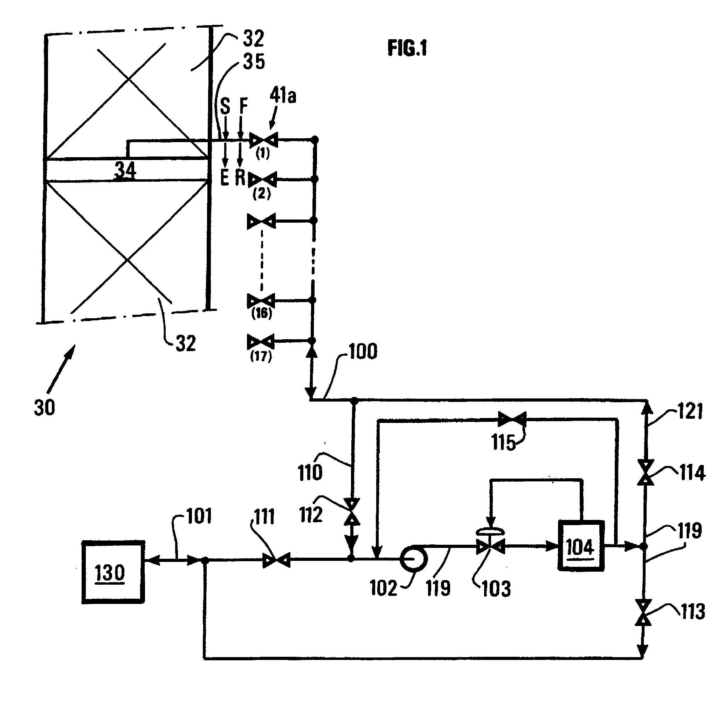

Selon une première variante (figure 1), la pompe de circulation peut aspirer le fluide contenu dans au moins un tronçon commun de volume v d'un lit donné situé entre l'organe de distribution de fluides, les vannes tout ou rien et la vanne de rinçage, et elle peut le refouler vers un collecteur extérieur. Inversement, la pompe de circulation peut aspirer le fluide d'un collecteur extérieur et le refouler vers un lit d'adsorbant donné.

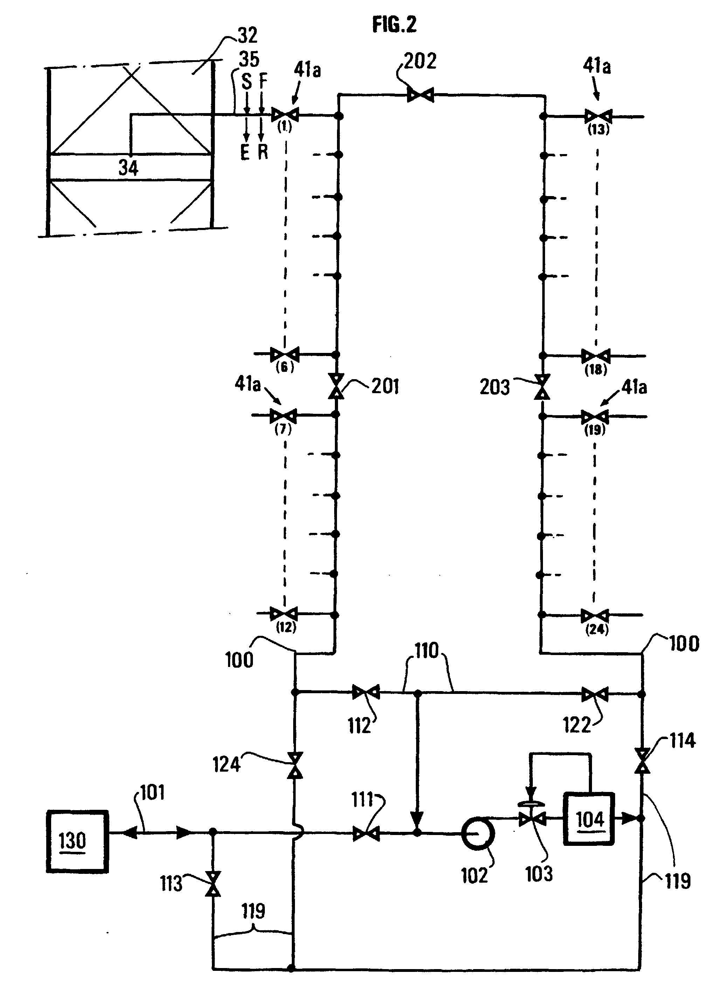

Selon une deuxième variante du dispositif de rinçage, la ligne de circulation de fluide peut être une boucle fermée (figure 2), chacune des vannes de rinçage étant connectée à ladite boucle, la boucle comprenant au moins une vanne tout ou rien (201) de sectionnement définissant au moins deux sections, deux vannes tout ou rien (112, 114 et 122, 124) à chacune des extrémités de la boucle adaptées à relier chaque extrémité soit à l'aspiration soit au refoulement de la pompe de circulation, et des moyens de commande permettant d'actionner la vanne de sectionnement et les vannes tout ou rien de chaque extrémité de la boucle de façon à orienter la circulation du fluide prélevé dans une section et celle du fluide refoulé dans une autre section de la boucle dans un sens ou dans l'autre.

La boucle fermée de circulation peut comprendre n vannes de sectionnement qui définissent n + 1 sections.

Selon un autre mode de réalisation de cette deuxième variante, une ligne de fluide extérieur peut être connectée à l'aspiration de la pompe ou du compresseur par une vanne tout ou rien, de façon à refouler ce fluide extérieur vers un lit donné. Le refoulement de la pompe peut être connecté à une ligne extérieure par une autre vanne tout ou rien, de façon à évacuer vers un collecteur extérieur approprié le contenu d'un ou plusieurs tronçons communs.

L'invention concerne aussi l'utilisation du dispositif de rinçage dans un procédé de séparation d'une charge en au moins un de ses constituants, en lit mobile simulé pour rincer au niveau d'un lit, au moins un tronçon commun de volume v, situé entre l'organe de distribution des fluides, les vannes tout ou rien (36a, 37a, 38a et 39a) et la vanne de rinçage (41a).

Ce procédé de séparation peut s'appliquer à la séparation de paraxylène à partir d'une charge d'hydrocarbures aromatiques à 8 atomes de carbone comprenant des xylènes, en vue de la préparation d'acide ou d'anhydride téréphtalique, un intermédiaire dans la synthèse des nylons, ou du téréphtalate de méthyle, un intermédiaire dans la synthèse de certaines matières plastiques.

Il peut s'appliquer aussi à la séparation des diéthylbenzènes ainsi qu'à la séparation d'éthylbenzène, de normales et isoparaffines, d'oléfines, de sucres, et plus généralement aux séparations de mélanges de produits relevant de l'adsorption ou de la chromatographie par exemple, la séparation d'isomères optiques.

Il peut s'appliquer à la séparation du paradiéthylbenzène à partir d'un mélange de diéthylbenzènes, qui est un bon désorbant.

Selon un premier mode de mise en oeuvre du procédé d'utilisation correspondant à la première variante du dispositif (figure 1) on peut prélever séquentiellement, pendant au moins une partie d'une période T de permutation, le fluide contenu dans le tronçon commun [situé entre l'organe de distribution des fluides, les vannes tout ou rien (36a, 37a, 38a, 39a) et la vanne de rinçage (41a)], à un débit $\frac{v}{t}$, v étant le volume du tronçon commun, t ≤ T, et on le refoule vers le collecteur extérieur.

Par prélèvement séquentiel on entend un prélèvement synchronisé avec les autres opérations d'alimentation et de soutirage durant une partie au moins d'une période de permutation (temps écoulé entre les moments où s'effectue la permutation d'un lit à un autre).

Selon un deuxième mode de mise en oeuvre du procédé d'utilisation correspondant à la première variante du dispositif (figure 1), on peut prélever séquentiellement, pendant au moins une partie d'une période T de permutation, un fluide d'un collecteur extérieur et on le refoule dans le tronçon commun [situé entre l'organe de distribution des fluides, les vannes tout ou rien (36a, 37a, 38a, 39a) et la vanne de rinçage (307)], à un débit $\frac{v}{t}$, v étant le volume du tronçon et t ≤ T.

Selon un troisième mode de mise en oeuvre du procédé d'utilisation correspondant à la première variante du dispositif (figure 1), on peut prélever séquentiellement pendant une partie d'une période T de permutation, le fluide contenu dans le tronçon commun [situé entre l'organe de distribution des fluides, les vannes tout ou rien (36a, 37a, 38a, 39a) et la vanne de rinçage (41a)], correspondant à un lit d'une zone donnée et on le refoule vers le collecteur extérieur et pendant une autre partie de la période, on prélève ledit fluide du collecteur extérieur et on le refoule dans le tronçon commun d'un lit situé dans une autre zone.

Il peut être particulièrement avantageux de refouler la charge du tronçon commun d'un lit de la zone 2 par de l'extrait provenant d'une ligne extérieure à un débit $\frac{2v}{t}$ avec t ≤ T pendant une partie de la période de permutation T et on aspire l'extrait du tronçon commun d'un lit de la zone 1 pour le refouler pendant une autre partie de la période dans la ligne de soutirage d'extrait.

Selon un premier mode de mise en oeuvre du procédé d'utilisation correspondant à la deuxième variante du dispositif (figure 2), on peut prélever durant une partie au moins d'une période T de permutation, du fluide contenu dans le tronçon commun d'un lit d'une section et on le refoule dans un lit d'une autre section, à un débit $\frac{v}{t}$ avec t ≤ T, la vanne de sectionnement (201) entre les deux sections étant fermée.

Selon un deuxième mode de mise en oeuvre du procédé d'utilisation correspondant à la deuxième variante du dispositif (figure 2), on peut prélever durant une partie au moins d'une période T de permutation, du fluide contenu dans le tronçon commun d'un lit d'une section et on le refoule dans un lit d'une autre section, à un débit $\frac{v}{t}$ avec t ≤ T, au moins une des vannes de sectionnement (201, 202, 203) étant fermée.

Selon un troisième mode de mise en oeuvre du procédé d'utilisation correspondant à la deuxième variante du dispositif (figure 2), on peut prélever séquentiellement durant une partie d'une période du fluide du tronçon commun d'un lit d'une première section et on le refoule dans un lit d'une section différente et durant une autre partie de la période, on prélève du fluide du tronçon commun d'un lit d'une autre section et on le refoule dans le lit d'une section différente.

Selon un quatrième mode de mise en oeuvre du procédé d'utilisation correspondant à la deuxième variante du dispositif (figure 2), on peut prélever séquentiellement durant une partie d'une période du fluide du tronçon commun d'un lit d'une section et on le refoule dans un lit d'une autre section et durant une autre partie de la période, on prélève du fluide d'une source extérieure et on le refoule dans le même lit de ladite section ou dans un lit différent.

Selon un cinquième mode de mise en oeuvre du procédé d'utilisation correspondant à la deuxième variante du dispositif (figure 2), on peut prélever séquentiellement durant une partie de la période, du fluide du tronçon commun d'un lit d'une section et on le refoule dans un lit d'une autre section et pendant une autre partie de la période, on prélève du fluide contenu dans le tronçon commun d'un lit et on le refoule vers une source extérieure.

De manière générale, on prélève ou on refoule de 0,5 à 3 fois le volume du tronçon commun défini ci-avant.

L'invention sera mieux comprise au vu des figures illustrant de manière schématique un mode de réalisation du dispositif et du procédé selon l'invention, parmi lesquelles :

- la figure 1 représente un ensemble de moyens à mettre en oeuvre pour réaliser le dispositif de rinçage selon l'invention.

- La figure 2 montre le dispositif de rinçage avec une ligne de circulation du fluide de rinçage, en forme de boucle fermée.

- La figure 3 illustre une connexion de la ligne de rinçage au niveau de chaque lit de la zone d'adsorption.

- Les figures 4a, 4b, 4c, Sa, 5b, *5c,* 6a, 6b, 6c, 6d montrent une représentation des différentes opérations de rinçage durant une partie au moins d'une période de temps en relation avec les différents flux entrant (solvant (S), charge (F) et sortant (raffinat (R) et extrait (E)).

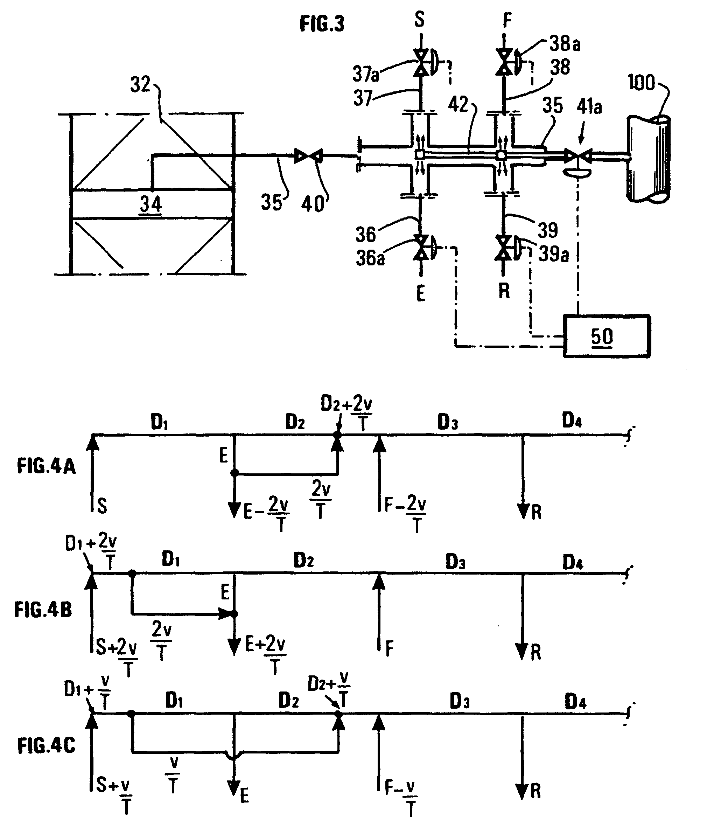

Selon la figure 3, un adsorbeur, localisé dans une ou plusieurs colonnes, contenant un adsorbant approprié comprend dix sept lits 32. Chaque lit est connecté par un distributeur 34 à une ligne 35 qui reçoit alternativement des alimentations en charge 38 et en solvant 37 contrôlées par des vannes 37a et 38a. La ligne 35 est par ailleurs connectée à des lignes de soutirage d'un extrait 36 et d'un raffinat 39 contrôlée respectivement par des vannes 36a et 39a.

La ligne 35 est par ailleurs reliée à une ligne de circulation 100 d'un fluide de rinçage qui reçoit toutes les lignes 35 en provenance de l'ensemble des lits d'adsorbant 32. Chaque ligne 35 est contrôlée par une vanne de rinçage 4 la située entre les lignes d'alimentation ou de soutirage et la ligne 100. Des moyens de rinçage 42 dans la ligne 35 alimentés par la ligne 100 permettent de diriger un jet de fluide au niveau de chaque alimentation et soutirage. Une autre vanne 40 dite de block est située sur la ligne 35 entre les lignes d'alimentation ou de soutirage et le plateau distributeur 34 et permet d'isoler le lit particulier. Toutes ces vannes 41a sont connectées à un organe de commande d'ouverture ou de fermeture 50, qui peut aussi commander le fonctionnement de l'ensemble des vannes du dispositif de rinçage.

Par souci de simplification, (figure 1) les vannes de rinçage 41a (numérotées de 1 à 17) correspondent aux 17 lits de l'adsorbeur. La ligne 100 de circulation est reliée par une ligne 110 via une vanne 112 à l'entrée d'une pompe de circulation 102 et le refoulement de la pompe est connecté à une ligne 119 sur laquelle est disposée une vanne de sectionnement 113, et à une ligne 101 reliée à un réservoir 130 de fluide. Le débit de sortie de la pompe est contrôlé par une vanne de régulation 103 et un débitmètre 104.

Une vanne de sectionnement 111 relie la ligne 101 et le réservoir 130 à l'entrée de la pompe 102, tandis qu'une autre vanne de sectionnement 114 sur une ligne 121 relie la ligne 119 à la ligne 100 de circulation du fluide de rinçage.

Par ce dispositif, il est donc possible de faire circuler du fluide de rinçage de chaque lit vers le réservoir 130 en fermant les vannes 111 et 114 et en ouvrant les vannes 112 et 113 ou bien de faire circuler du fluide du réservoir 130 vers un des lits de l'adsorbeur en fermant les vannes 113 et 112 et en ouvrant les vannes 111 et 114.

Lorsque l'on ne prélève pas de fluide de l'un des lits et lorsque l'on n'en injecte pas , les vannes 111, 112, 113 114 sont fermées et la vanne 115 ouverte de manière à laisser la pompe 102 débiter en boucle fermée.

Selon un premier mode de mise en oeuvre du dispositif correspondant à la première variante, lorsque l'on veut aspirer le contenu de la ligne commune aux quatre flux, on doit réaliser cette opération de manière synchronisée avec les autres opérations se déroulant dans le ou les colonnes d'adsorption au cours de la période entre deux permutations.

Par exemple, si l'on veut aspirer le bouchon de charge contenu dans le "tronçon commun" pendant la période qui précède juste le prélèvement d'extrait, on procède de la manière suivante :

- en période n°1 du cycle, on admet que l'extrait est prélevé du lit n°4 (vanne n°5 desservant la sortie du lit n°4 et l'entrée du lit n°5). On ouvre la vanne de rinçage n°6, on ouvre la vanne n°112 reliant la ligne 100 à l'aspiration de la pompe 102, on impose un débit égal à $\frac{v}{T}$ par exemple (où v représente le volume du tronçon commun et T la période de permutation) grâce à la vanne de régulation 103 et au débitmètre 104, on ouvre la vanne 113 de manière à refouler le fluide contenu dans le tronçon commun vers l'aspiration de la pompe de charge à travers la ligne 101. De cette manière, le bouchon de charge initialement contenu dans le tronçon n°6 est refoulé vers le circuit de charge, tandis que le tronçon commun se trouve rempli de liquide prélevé en zone 2 que l'on peut qualifier d'extrait concentré impur. Il est à remarquer qu'ici on a prélevé la charge contenue dans le tronçon commun avec un débit $\frac{v}{T}$ et pendant un temps T.

   On pourrait fort bien réaliser la même opération en un temps $\frac{T}{2}$ et avec un débit $\frac{2v}{T}$. Pendant l'autre partie de la période, la pompe 102 continuerait à faire circuler du fluide en boucle fermée, les vannes 111, 112, 113, 114 étant fermées et la vanne 115 ouverte.

- Au cours de la période n°2 l'extrait est prélevé à la sortie du lit n°5 (vanne n°6). Le tronçon commun qui a été préparé au cours de la période précédente est donc déjà plein d'extrait. Pendant la période n°2, on prépare le tronçon commun n°7 au moyen de la vanne de rinçage n°7, et ainsi de suite de période en période.

Selon un deuxième mode de mise en oeuvre de la première variante, lorsque l'on veut refouler le bouchon occupant le tronçon commun dans les adsorbeurs, on réalisera également cette opération en synchronisation avec les autres injections et soutirages. Par exemple si l'on veut refouler le bouchon d'extrait dans l'adsorbeur pendant la période qui suit juste le prélèvement d'extrait, on procède de la manière suivante :

Encore une fois, on admet qu'en période 1 du cycle l'extrait est prélevé du lit n°4 (vanne n°5 desservant la sortie du lit n°4). On relie la ligne 101 au circuit de solvant, on ouvre la vanne 111 reliant la ligne 101 à la pompe 102, on ferme les vannes 112 et 113. On impose pendant un temps $t_1$ tel que $t_1 \leq T$ un débit $\frac{v}{t_1}$ par exemple (où v représente le volume du tronçon commun) grâce à la vanne de régulation 103 et au débitmètre 104, on ouvre la vanne 114 de manière à refouler du solvant dans la ligne 100, on ouvre la vanne de rinçage n°4 de manière à chasser l'extrait contenu dans le tronçon commun par du solvant.

Au cours de la période 4, lorsque le solvant sera injecté à l'entrée du lit n°4, le tronçon commun sera au départ plein de solvant. Pendant la période n°2 on prépare le tronçon commun n°5 au moyen de la vanne de rinçage n°5 et ainsi de suite de période en période.

Au moyen de ce dispositif, il est possible de remédier au cours d'une seule et même période à tous les inconvénients cités plus haut, en utilisant le dispositif de l'invention à temps partagé, par exemple entre chacun des quatre flux.

Par exemple de t = 0 à $\frac{T}{4}$, on aspirera avec un débit égal à $\frac{4v}{T}$ le bouchon de charge situé dans le tronçon commun du lit duquel on va soutirer l'extrait durant la période suivante. De t = $\frac{T}{4}$ à $\frac{T}{2}$, on aspirera avec un débit égal à $\frac{4v}{T}$ le bouchon de raffinat situé dans le tronçon commun du lit dans lequel on va injecter la charge durant la période suivante. De t = $\frac{T}{2}$ à $\frac{3T}{4}$, on aspirera avec un débit égal à $\frac{4v}{T}$ le bouchon de solvant situé dans le tronçon commun du lit duquel on va soutirer le raffinat au cours de la période suivante. De t = $\frac{3T}{4}$ à T, on aspirera avec un débit égal à $\frac{4v}{T}$ le bouchon d'extrait situé dans le tronçon commun du lit dans lequel on va injecter du solvant durant la période suivante. En moyenne sur la période, on aspire les bouchons de charge, le bouchon de raffinat, le bouchon d'extrait et le bouchon de solvant, chacun avec un débit $\frac{v}{T}$. L'inconvénient est qu'il n'est pas possible de réaliser de manière pratique une ségrégation de ces différents bouchons de chacun des quatre flux, et que l'ensemble doit être renvoyé à une colonne à distiller au moyen de la ligne 101 de manière à se séparer du solvant et de la charge.

De manière préférée, il est par contre possible d'utiliser successivement ce même dispositif une fois en injection et une fois en soutirage en reliant la ligne 101 à un seul et même flux de manière à remédier à deux des quatre inconvénients précités.

Ainsi, par exemple de t = 0 à $\frac{T}{2}$ selon la figure 4a, on repoussera au moyen d'extrait provenant du soutirage d'extrait injecté avec un débit égal à $\frac{2v}{T}$, le bouchon de charge situé dans le tronçon commun du lit dans lequel la charge a été injectée au cours de la période précédente. De t = $\frac{T}{2}$ à T selon la figure 4b, on aspirera le bouchon d'extrait situé dans le tronçon commun du lit dans lequel le solvant sera injecté au cours de la période suivante et ce également avec un débit de $\frac{2v}{T}$ pour le refouler vers le soutirage d'extrait. De cette manière, le débit moyen d'extrait sera constant : pendant la première demi-période, le débit d'extrait envoyé vers la colonne à distiller l'extrait sera E - $\frac{2v}{T}$ alors que pendant la seconde demi-période, ce débit sera E + $\frac{2v}{T}$.

Il est en outre possible de sauvegarder les débits dans les quatre zones par rapport à un système qui ne nécessite pas de rinçage de ligne.
Sur la figure 4c, il apparaît que pour maintenir dans les zones 1 à 4 les débits D1, D2, D3 et D4, on doit augmenter le débit de solvant et réduire le débit de charge d'une valeur $\frac{v}{T}$, par rapport à un système qui ne comprendrait pas de tronçon commun, de manière à sauvegarder le rendement et la pureté. En effet, la perte de productivité due à la réinjection de raffinat en zone 3 et le gaspillage de solvant dû au prélèvement de solvant avec le raffinat n'ont pas été compensés.

Pour résoudre simultanément les quatre inconvénients précités, il faudrait utiliser simultanément deux dispositifs décrits selon la figure 1.

La figure 2 représente un mode de réalisation préféré du dispositif de rinçage d'un adsorbeur à lit mobile simulé selon l'invention.

Cet adsorbeur comprend les lignes et vannes des figures 1 et 3 avec les mêmes fonctions. Il comporte en outre vingt quatre lits par exemple, une vanne de rinçage 41a par lit, numérotée de 1 à 24 et un dispositif de connexion, selon la figure 3, de chaque distributeur entre deux lits consécutifs avec la ligne 100 de circulation du fluide en boucle fermée.

Sur cette boucle fermée, des vannes de sectionnement, trois par exemple 201, 202 et 203 déterminent quatre sections comprenant chacune six vannes de rinçage 41a.

Le dispositif représenté par la figure 2 permet d'aspirer un fluide de n'importe laquelle des quatre sections et de le refouler vers l'une des trois autres. Il est ainsi possible de déplacer les bouchons contenus initialement dans deux tronçons communs différents l'un par l'autre.

Pour cela, l'aspiration de la pompe 102 et la ligne 110 peuvent être reliés à chacune des deux extrémités de la ligne 100 : vanne 112 (côté 12ième vanne) et vanne 122 (côté 24ième vanne). De même le refoulement de la pompe 102 et la ligne 119 peuvent être reliés à chacune des deux extrémités de la ligne 100 : vanne 124 (côté 12ième vanne) et vanne 114 (côté 24ième vanne).

Il devient également possible de réaliser directement le schéma représenté en figure 4c. Ceci présente entre autres l'avantage de ne pas être obligé à certaines périodes du cycle, de changer de débit de recyclage en cours de période pour pouvoir garder les débits constants dans toutes les autres zones.

Afin d'en faciliter la compréhension, on va décrire le fonctionnement du dispositif préféré selon l'invention pour réaliser le déplacement représenté en figure 4c. En période 1 du cycle, on supposera que le solvant est injecté sur le lit n°1 et la charge sur le lit n°13, tandis que l'extrait et le raffinat sont prélevés respectivement des lits 6 et 18. Durant cette période, on ouvre la vanne de rinçage n°2, les vannes de sectionnement 202 et 203, et la vanne 122 de manière à pouvoir aspirer le bouchon d'extrait situé dans le tronçon commun du lit 2 au moyen de la pompe 102 tout en contrôlant le débit au moyen de la vanne de régulation 103 et du débitmètre 104 et on ouvre la vanne 124 et la vanne de rinçage n°12 de manière à repousser par de l'extrait le bouchon de charge situé dans le tronçon commun du lit n°12. Les vannes 201, 111, 112, 113 et 114 restent fermées.

Il est également possible d'utiliser le dispositif successivement pour deux déplacements différents au cours du cycle. On peut ainsi remédier à trois des quatre inconvénients précités tout en gardant constamment dans la boucle des fluides compatibles entre eux, tel que solvant et extrait dilué par exemple.

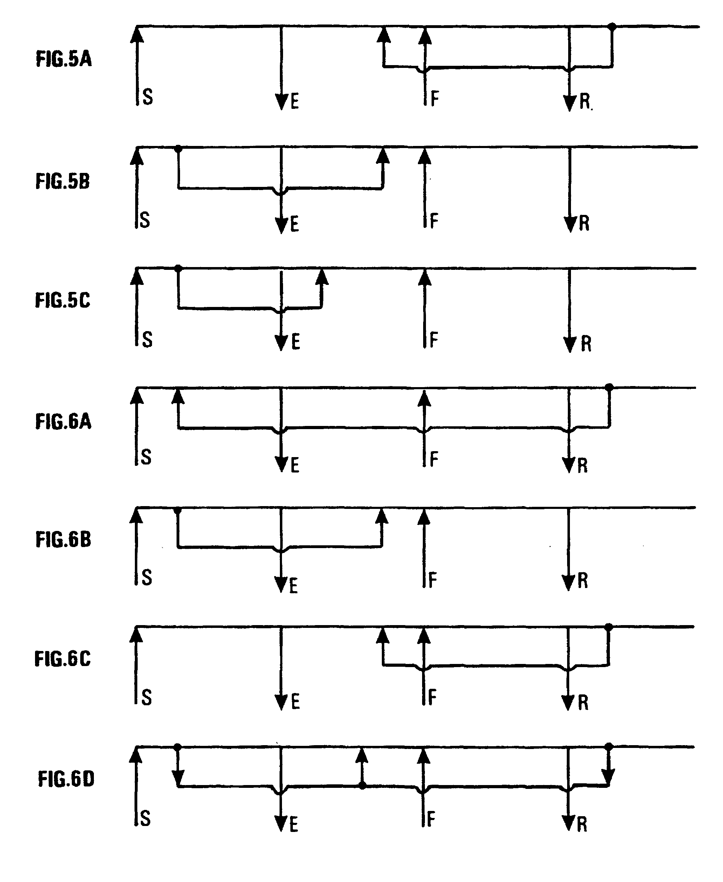

Lorsque l'on vise une très haute pureté, il est préféré de rincer le tronçon commun par plusieurs fois son volume si l'on veut être sûr d'éliminer complètement les impuretés. On peut minimiser la surconsommation de solvant en adoptant par exemple les cycles de déplacement décrits dans les figures 5 et 6.

Selon la figure 5a : de t = 0 à 0,4 T (toujours par référence à la période n°1 du cycle) on ouvre la vanne de rinçage n°20 et la vanne 122. Les vannes 201, 202 et 203 sont fermées. La pompe 102 et la boucle de contrôle de débit permettent de refouler avec un débit 2v/t vers la ligne 100 (vanne 124 ouverte, vanne 112 fermée) et vanne de rinçage n°12 ouverte. On prélève ainsi le solvant contenu dans le tronçon commun en sortie du lit n°19, ce solvant est remplacé par du raffinat dilué. C'est pourquoi on prend garde à ne déplacer que 0,8 fois le volume du tronçon commun afin d'éviter toute pollution. Le contenu de la ligne 100 repousse quant à lui vers l'adsorbeur la majorité du bouchon de charge contenu dans le tronçon commun du lit n°12.

Selon la figure 5b : de t = 0,4 T à 0,6 T, on ouvre la vanne de rinçage du lit n°2, la vanne 201 est fermée, les vannes 202 et 203 ouvertes ainsi que la vanne 122. La pompe 102, la vanne de contrôle 103 et le débit mètre 104 permettent de renvoyer avec le débit $\frac{2v}{T}$ le contenu. On achève ainsi de déplacer vers l'intérieur de l'absorbeur le bouchon de charge qui se trouvait dans le tronçon commun du lit n°12. On évite ainsi de renvoyer, au cours de la fin de la période (figure 5c), un volume de charge aussi faible soit-il à proximité immédiate du point de prélèvement d'extrait.

Selon la figure 5c : de t = 0,6 T à T, on ouvre la vanne de rinçage du lit n°2, les vannes de sectionnement 202 et 203 et la vanne 122. La vanne 201 est fermée. La pompe 102, la vanne de contrôle 103 et le débitmètre 104 permettent de renvoyer avec le débit $\frac{2v}{T}$ le contenu de la ligne 100 vers la vanne de rinçage du lit n°8 en passant à travers la vanne 124. On aspire donc un bouchon d'extrait dilué, qui se trouve remplacé par du solvant dans le tronçon commun du lit n°2, tandis que le contenu de la ligne 100 finit de rincer le tronçon commun du lit n°8.

Le contenu de la ligne 100 se trouve donc être un mélange de solvant et d'extrait dilué.

Selon la figure 6a : de t = 0 à 0,4 T, toujours par référence à la période n°1 du cycle, on ouvre la vanne de rinçage du lit n°20 et la vanne 122. La pompe 102 et la boucle de contrôle de débit permettent de refouler avec un débit $\frac{2v}{T}$ vers la ligne 100 (vanne 124 ouverte et vanne 112 fermée). On ouvre la vanne 201 et la vanne de rinçage n°3. On prélève ainsi le solvant contenu dans le tronçon commun en sortie du lit n°19, ce solvant est remplacé par du raffinat dilué. On prend donc garde à ne déplacer que 0,8 fois le volume du tronçon commun, afin d'éviter toute pollution. Le contenu de la ligne 100 repousse quant à lui vers l'adsorbeur la majorité du bouchon d'extrait contenu dans le tronçon commun du lit n°3.

Selon la figure 6b, de t = 0,4 T à T, la vanne de rinçage n°3 est laissée ouverte. On ouvre les vannes 202 et 203. La pompe 102, la vanne de régulation 103 et le débitmètre 104 permettent de refouler à travers la vanne 124 vers la ligne 100 avec un débit de $\frac{2v}{T}$. Le solvant contenu dans la ligne 100 repousse le bouchon de charge contenu dans le tronçon commun du lit n°12. Les avantages de cette manière d'opérer sont que la ligne 100 contient alors essentiellement du solvant et que chaque vanne de rinçage ne s'ouvre et ne se ferme que trois fois par cycle au lieu de quatre dans la suite d'opérations décrites dans les cas des figures 5a, 5b, 5c.

Il est également à noter que la suite d'opérations effectuée en figures 6a et 6b n'est ni équivalente à celle de la figure 6c puisque le bouchon d'extrait compris entre l'injection de solvant et le prélèvement d'extrait est récupéré, ni équivalente à celle de la figure 6d puisque dans ce cas comme dans celui des figures 5a, 5b, 5c le contenu de la ligne 100 serait un mélange solvant-extrait au lieu d'être essentiellement du solvant.

## Revendications

1. Dispositif de rinçage pour une unité d'adsorption d'une charge en lit mobile simulé comprenant une pluralité de lits (32) d'un adsorbant, chacun d'entre eux étant compris entre deux organes (34) de distribution de fluides successifs auxquels il est relié, ledit dispositif comprenant une pluralité de lignes de distribution de fluides (35), chaque ligne (35) étant prévue pour être raccordée à un organe (34) de distribution de l'unité d'adsorption lui correspondant, chaque ligne (35) disposant d'au moins une entrée (38) de charge, au moins une entrée (37) d'un désorbant, éventuellement au moins une entrée d'un reflux interne, au moins un soutirage (36) d'un extrait et au moins un soutirage (39) d'un raffinat, chaque entrée et chaque soutirage comportant une vanne tout ou rien (36a, 37a, 38a, 39a), le dispositif étant **caractérisé en ce que** chaque ligne (35) comprend au moins une vanne de rinçage (41a), qui lui est propre, reliée à des moyens (42) de rinçage dans ladite ligne, l'ensemble des vannes de rinçage (41a) étant connecté à au moins une ligne (100) de circulation d'un fluide déplacé, ladite ligne (100) comportant au moins une pompe de circulation (102) ou un compresseur du fluide et au moins un moyen de contrôle (103,104) du débit de fluide délivré par la pompe ou le compresseur, chaque vanne de rinçage (41a) et chacune des vannes tout ou rien (36a,37a,38a,39a) étant connectée à un organe (50) de commande d'ouverture ou de fermeture des dites vannes,

chaque ligne (35) de distribution, en association avec l'organe (34) de distribution correspondant, détermine un tronçon commun de volume v délimité par ladite ou lesdites vanne(s) de rinçage(s) (41a), les vannes tout ou rien (36a,37a,38a,39a) et ledit organe (34) de distribution,

le compresseur ou la pompe de circulation (102) étant adaptés à aspirer le fluide contenu dans le tronçon commun de chaque ligne (35) de distribution et à refouler ledit fluide vers un collecteur (130) extérieur ou à aspirer le fluide d'un collecteur (130) extérieur et à le refouler vers un lit d'adsorbant déterminé.

2. Dispositif selon la revendication 1 dans lequel la ligne de circulation (100) est une boucle fermée, chacune des vannes de rinçage étant connectée à ladite boucle, la boucle comprenant au moins une vanne tout ou rien (201) de sectionnement définissant au moins deux sections, deux vannes tout ou rien (112, 114 et 122, 124) à chacune des extrémités de la boucle adaptées à relier chaque extrémité soit à l'aspiration soit au refoulement de la pompe de circulation ou du compresseur, et des moyens de commande permettant d'actionner la vanne de sectionnement et les vannes tout ou rien de chaque extrémité de la boucle de façon à orienter la circulation du fluide prélevé dans une section et du fluide refoulé dans une autre section de la boucle dans un sens ou dans l'autre.

3. Dispositif selon la revendication 2, dans lequel la boucle fermée de circulation comprend n vannes de sectionnement (201, 202, 203) définissant n + 1 sections.

4. Dispositif selon la revendication 2 ou 3 dans lequel une ligne de fluide extérieur (101) est connectée soit à l'aspiration de la pompe ou du compresseur par une vanne (111) soit au refoulement de la pompe par une vanne (113).

5. Utilisation du dispositif selon la revendication 1 dans un procédé de séparation d'une charge en au moins un de ses constituants, en lit mobile simulé, pour rincer, à chaque période au niveau d'un lit donné le tronçon commun de volume v.

6. Utilisation selon la revendication 5 dans laquelle on prélève séquentiellement, pendant au moins une partie d'une période T de permutation, le fluide contenu dans le tronçon commun à un débit $\frac{v}{t}$, v étant le volume du tronçon commun, $t \leq T$, et on le refoule vers le collecteur extérieur.

7. Utilisation selon la revendication 5 dans laquelle on prélève séquentiellement, pendant au moins une partie d'une période T de permutation, un fluide d'un collecteur extérieur et on le refoule dans le tronçon commun à un débit $\frac{v}{t}$, v étant le volume du tronçon et $t \leq T$.

8. Utilisation selon la revendication 5, dans laquelle on prélève séquentiellement, pendant une partie d'une période T de permutation, le fluide contenu dans le tronçon commun correspondant à un lit d'une zone donnée et on le refoule vers le collecteur extérieur et pendant une autre partie de la période, on prélève ledit fluide du collecteur extérieur et on le refoule dans le tronçon commun d'un lit situé dans une autre zone.

9. Utilisation selon la revendication 5 dans laquelle on refoule la charge du tronçon commun d'un lit de la zone 2 par de l'extrait provenant d'une ligne extérieure à un débit $\frac{2v}{t}$ avec $t \leq T$ pendant une partie de la période de permutation T et on aspire l'extrait du tronçon commun d'un lit de la zone 1 pour le refouler pendant une autre partie de la période dans ladite ligne extérieure de soutirage d'extrait.

10. Utilisation du dispositif selon l'une des revendications 2 à 4 dans un procédé de séparation d'une charge en au moins un de ses constituants, en lit mobile simulé, pour rincer à chaque période au niveau d'un lit donné le tronçon commun de volume v.

11. Utilisation selon la revendication 10 dans laquelle on prélève, durant une partie au moins d'une période T de permutation, du fluide contenu dans le tronçon commun d'un lit d'une section et on le refoule dans un lit d'une autre section, à un débit $\frac{v}{t}$ avec $t \leq T$, au moins une des vannes de sectionnement (201, 202, 203) étant fermée.

12. Utilisation selon la revendication 10 dans laquelle on prélève séquentiellement durant une partie d'une période du fluide du tronçon commun d'un lit d'une section et on le refoule dans un lit d'une autre section et durant une autre partie de la période, on prélève du fluide du tronçon commun d'un lit d'une section et on le refoule dans le lit d'une autre section.

13. Utilisation selon la revendication 10 dans laquelle on prélève séquentiellement durant une partie d'une période du fluide du tronçon commun d'un lit d'une section et on le refoule dans un lit d'une autre section et durant une autre partie de la période, on prélève du fluide d'une source extérieure et on le refoule dans le même lit de ladite section ou dans un lit différent.

14. Utilisation selon la revendication 10 dans laquelle on prélève séquentiellement durant une partie de la période, du fluide du tronçon commun d'un lit d'une section et on le refoule dans un lit d'une autre section et pendant une autre partie de la période, on prélève du fluide contenu dans le tronçon commun d'un lit et on le refoule vers une source extérieure.

15. Utilisation selon l'une des revendications 5 à 14 dans laquelle on prélève ou on refoule de 0,5 à 3 fois le volume du tronçon commun.

16. Utilisation selon l'une des revendications 5 à 15 dans laquelle la charge contient un mélange de xylènes.

**Patentansprüche**

1. Spülvorrichtung für eine Adsorptionseinheit einer Charge im simulierten beweglichen Bett, eine Vielzahl von Betten (32) eines Adsorbens umfassend, wobei ein jedes hiervon zwischen zwei aufeinander folgenden Fluidverteilerorganen (34), mit denen es verbunden ist, angeordnet ist, diese Vorrichtung eine Vielzahl von Fluidverteilerleitungen (35) umfasst, wobei jede Leitung (35) vorgesehen ist, um mit einem Verteilerorgan (34) der ihr entsprechenden Adsorptionseinheit verbunden zu werden, jede Leitung (35) über wenigstens einen Eingang (38) für die Charge, wenigstens einen Eingang (37) für ein Desorbens, gegebenenfalls wenigstens einen Eingang für einen inneren Rückfluss, wenigstens einen Abzug (36) für ein Extrakt und wenigstens einen Abzug (39) für ein Raffinat verfügt, jeder Eingang und jeder Abzug ein JA/NEIN-Ventil (36a, 37a, 38a, 39a) umfasst, wobei die Vorrichtung sich dadurch auszeichnet, dass jede Leitung (35) wenigstens ein ihr eigenes Spülventil (41a) umfasst, welches mit Spülmitteln (42) in dieser Leitung verbunden ist und die Gesamtheit der Spülventile (41a) mit wenigstens einer Zirkulationsleitung (100) für ein verdrängtes Fluid verbunden ist, die Leitung (100) wenigstens eine Zirkulationspumpe (102) oder einen Kompressor des Fluids und wenigstens ein Regelmittel (103, 104) für den von der Pumpe oder dem Kompressor gelieferten Fluiddurchsatz umfasst, jedes Spülventil (41a) und jedes der JA/NEIN-Ventile (36a, 37a, 38a, 39a) mit einem Steuerorgan (50) für das Öffnen oder Schließen dieser Ventile verbunden ist, jede Verteilerleitung (35) in Zuordnung zu dem entsprechenden Verteilerorgan (34) einen gemeinsamen Abschnitt vom Volumen v bestimmt, der durch diese JA/NEIN-Spülventile (41a), die JA/NEIN-Ventile (36a, 37a, 38a, 39a) und dieses Verteilerorgan (34) begrenzt ist,

der Kompressor oder die Zirkulationspumpe (102) so ausgelegt sind, dass sie das in diesem gemeinsamen Abschnitt jeder Verteilerleitung (35) enthaltene Fluid ansaugt und es gegen einen äußeren Kollektor (130) verdrängt oder das Fluid aus einem äußeren Kollektor (130) ansaugt und es gegen ein bestimmtes Adsorberbett fördert.

2. Vorrichtung nach Anspruch 1, bei der die Zirkulationsleitung (100) aus einer geschlossenen Schleife besteht, jedes der Spülventile mit dieser Schleife verbunden ist, die Schleife wenigstens ein JA/NEIN-Ventil (201) für Unterteilung, die wenigstens zwei Abschnitte definiert, sowie zwei JA/NEIN-Ventile (112, 114 und 122, 124) an jedem der Enden der Schleife umfasst, die ausgelegt sind, um jedes Ende entweder an die Ansaugung oder an die Verdrängerseite der Zirkulationspumpe oder des Kompressors zu verbinden, und Steuermittel, die es ermöglichen, das Unterteilungsventil und die JA/NEIN-Ventile jedes Endes der Schleife zu betätigen, derart, dass die Zirkulation des in einem Abschnitt entnommenen Fluids und des in einen anderen Abschnitt der Schleife verdrängten Fluids in der einen oder anderen Richtung orientiert wird.

3. Vorrichtung nach Anspruch 2, bei der die geschlossene Zirkulationsschleife n Unterteilungsventile (201, 202, 203), welche n + 1 Abschnitte definieren, umfasst.

4. Vorrichtung nach Anspruch 2 oder 3, bei der eine äußere Fluidleitung (101) entweder mit der Ansaugseite der Pumpe oder des Kompressors über ein Ventil (111) oder mit der Liefer- oder Verdrängerseite der Pumpe über ein Ventil (113) verbunden ist.

5. Verwendung der Vorrichtung nach Anspruch 1 bei einem Verfahren zur Trennung einer Charge in wenigstens einen ihrer Bestandteile im simulierten beweglichen Bett, um in jeder Periode, was ein gegebenes Bett angeht, den gemeinsamen Abschnitt vom Volumen v zu spülen.

6. Verwendung nach Anspruch 5, bei der man sequentiell während wenigstens eines Teils einer Schaltperiode T das in dem gemeinsamen Abschnitt enthaltene Fluid bei einem Durchsatz v/t entnimmt, wobei v das Volumen des gemeinsamen Abschnittes, $t \leq T$ ist und man es gegen den äußeren Sammler verdrängt.

7. Verwendung nach Anspruch 5, bei der man sequentiell während wenigstens eines Teils einer Schaltperiode T ein Fluid aus einem äußeren Sammler entnimmt und es in den gemeinsamen Abschnitt bei einem Durchsatz v/t liefert oder verdrängt, wobei v das Volumen des Abschnitts und $t \leq T$ ist.

**8.** Verwendung nach Anspruch 5, bei der man sequentiell während eines Teils einer Schaltperiode T das in dem gemeinsamen Abschnitt entsprechend einem Bett einer gegebenen Zone enthaltene Fluid entnimmt und es gegen den äußeren Sammler verdrängt und während eines anderen Teils der Periode man dieses Fluid aus dem äußeren Sammler entnimmt und es in den gemeinsamen Abschnitt eines in einer anderen Zone befindlichen Bettes verdrängt oder liefert.

**9.** Verwendung nach Anspruch 5, bei der man die Charge aus dem gemeinsamen Abschnitt eines Betts der Zone 2 durch Extrakt verdrängt, das aus einer äußeren Leitung kommt, und zwar bei einem Durchsatz von 2v/t und t ≤T über einen Teil der Schaltperiode T und dass man den Extrakt des gemeinsamen Abschnitts aus einem Bett der Zone 1 ansaugt, um ihn während eines anderen Teils der Periode in diese äußere Extraktabzugsleitung zu drücken.

**10.** Verwendung der Vorrichtung nach einem der Ansprüche 2 bis 4 bei einem Verfahren zur Trennung einer Charge in wenigstens einen ihrer Bestandteile, im simulierten beweglichen Bett, um in jeder Periode bezüglich eines gegebenen Bettes den gemeinsamen Abschnitt vom Volumen v zu spülen.

**11.** Verwendung nach Anspruch 10, bei der man während wenigstens eines Teils einer Schaltperiode T Fluid entnimmt, das im gemeinsamen Stück eines Betts eines Abschnitts enthalten ist und man es in das Bett eines anderen Abschnitts bei einem Durchsatz v/t, wobei t ≤T ist, verdrängt, wobei wenigstens eines der Unterteilungsventile (201, 202, 203) geschlossen ist.

**12.** Verwendung nach Anspruch 10, bei der man sequentiell während eines Teils der Periode Fluid aus dem gemeinsamen Stück eines Betts eines Abschnitts entnimmt und es in ein Bett eines anderen Abschnitts verdrängt und während eines anderen Teils der Periode man Fluid aus dem gemeinsamen Stück eines Betts eines Abschnitts entnimmt und es in das Bett eines anderen Abschnitts verdrängt oder liefert.

**13.** Verwendung nach Anspruch 10, bei der man sequentiell während eines Teils der Periode Fluid aus einem gemeinsamen Stück eines Betts eines Abschnitts entnimmt und es in ein Bett eines anderen Abschnitts liefert oder verdrängt, und während eines anderen Teils der Periode man Fluid aus einer äußeren Quelle entnimmt und es in das gleiche Bett dieses Abschnitts oder in ein unterschiedliches Bett liefert oder verdrängt.

**14.** Verwendung nach Anspruch 10, bei der man sequentiell während eines Teils der Periode Fluid aus dem gemeinsamen Stück eines Betts eines Abschnitts entnimmt und es in ein Bett eines anderen Abschnitts liefert oder verdrängt, und man während eines Teils der Periode Fluid entnimmt, das im gemeinsamen Stück eines Betts enthalten ist und es gegen eine äußere Quelle liefert oder verdrängt.

**15.** Verwendung nach einem der Ansprüche 5 bis 14, bei der man zwischen dem 0,5 bis 3fachen das Volumen des gemeinsamen Abschnitts entnimmt oder verdrängt.

**16.** Verwendung nach einem der Ansprüche 5 bis 15, bei der die Charge ein Gemisch aus Xylolen enthält.

**Claims**

**1.** A rinsing apparatus for a simulated moving bed feed adsorption unit comprising a plurality of beds (32) of an adsorbent, each of them being located between two successive fluid distribution means (34) connected to that bed,

said apparatus comprising a plurality of lines (35) for distributing fluids, each line (35) being provided to be connected to a corresponding distribution means (34),

each line (35) having at least one feed inlet (38), at least one desorbent inlet (37), optionally at least one internal reflux inlet, at least one outlet (36) for an extract and at least one outlet (39) for a raffinate, each inlet and outlet comprising an on-off valve (36a, 37a, 38a, 39a),

the apparatus being **characterized in that** each line (35) comprises at least one own rinsing valve (41a), connected to rinsing means (42) in said line, all of the rinsing valves (41a) being connected to at least one line (100) for circulating a displaced fluid, said line (100) comprising at least one fluid circulation pump (102) or a compressor for said fluid and at least one means (103, 104) for controlling the flow rate of the fluid delivered by the pump or the compressor, each of the rinsing valves (41a) and each of the on-off valves (36a, 37a, 38a, 39a) being connected to a means (50) for controlling the opening or closing of said valves,

each distribution line (35), in association with the corresponding distribution means (34), forming a common section with a volume v, delimited by said rinsing valve(s) (41a), the on-off valves (36a, 37a, 38a, 39a), and said distribution means (34),

the compressor or the circulation pump (102) being adapted for the suction of the fluid contained inside the common section of each distribution line (35), and for drawing off said fluid towards an external collector (130) or for the suction of fluid from an external collector (130) and for drawing off said latter fluid towards a particular adsorbent bed.

2. An apparatus according to claim 1, in which the circulation line (100) is a closed loop, each of the rinsing valves being connected to said loop, the loop comprising at least one on-off block valve (201) defining at least two sections, two on-off valves (112, 114 and 122, 124) at each of the extremities of the loop for connecting each extremity to either the intake or delivery of the circulation pump, and control means which can activate the block valve and the on-off valves of each extremity of the loop to orient the circulation of the fluid extracted from a section and that of the delivered fluid to another section of the loop in one direction or in another.

3. An apparatus according to claim 2, in which the closed circulation loop comprises n block valves (201, 202, 203) defining n + 1 sections.

4. An apparatus according to claim 2 or claim 3, in which the external fluid line (101) is connected either to the intake of the pump or the compressor via a valve (111) or to the delivery of the pump via a valve (113).

5. Use of an apparatus according to claim 1 in a simulated moving bed process for the separation of a feed into at least one of its constituents, to rinse, in each period for a given bed, the common section with volume v.

6. Use according to claim 5, in which the fluid contained in the common section is sequentially extracted during at least a portion of a permutation period T at a flow rate v/t, v being the volume of the common section, $t \le T$, and delivered to the external collector.

7. Use according to claim 5, in which fluid is sequentially extracted from an external collector during at least a portion of a permutation period T and delivered into the common section at a flow rate v/t, v being the volume of the common section, and $t \le T$.

8. Use according to claim 5, in which the fluid contained in the common section corresponding to a bed in a given zone is sequentially extracted during at least a portion of a permutation period T, and delivered to the external collector and during a further portion of the period, said fluid is extracted from the external collector and delivered to the common section of a bed located in another zone.

9. Use according to claim 5, in which the feed from the common section of a bed in zone 2 is drawn off by means of extract originating from an external line at a flow rate of 2v/t where $t \le T$ for a portion of permutation period T, and extract from the common section of a bed in zone 1 is drawn off and delivered during a further portion of the period into said extract outlet external line.

10. Use of an apparatus according to any one of claims 2 to 4 in a simulated moving bed process for the separation of a feed into at least one of its constituents, to rinse the common section with volume v in each period for a given bed.

11. Use according to claim 10, in which fluid contained in the common section of a bed in one section is extracted during at least a portion of a permutation period T and delivered to a bed of another section at a flow rate v/t, where $t \le T$, at least one of the block valves (201, 202, 203) being closed.

12. Use according to claim 10, in which the fluid of a common section of a bed in one section is sequentially extracted during a portion of a period and delivered to a bed in another section and during a further portion of the period, fluid is taken from the common section of a bed in one section and delivered to a bed in another section.

13. Use according to claim 10, in which the fluid of a common section of a bed in one section is sequentially extracted during a portion of a period and delivered to a bed in another section and during a further portion of the period, fluid is extracted from an external source and delivered to the same bed in said section or into a different bed.

14. Use according to claim 10, in which the fluid of a common section of a bed in one section is sequentially extracted during a portion of the period and delivered to a bed in another section and during a further portion of the period, fluid contained in the common section of one bed is extracted and delivered to an external source.

15. Use according to any one of claims 5 to 14, in which 0.5 to 3 times the volume of the common section is extracted or delivered.

16. Use according to any one of claims 5 to 15, in which the feed contains a mixture of xylenes.

FIG.1

**FIG.2**

**FIG.3**

FIG.4A

FIG.4B

FIG.4C

EP 0 818 226 B1

FIG.5A

FIG.5B

FIG.5C

FIG.6A

FIG.6B

FIG.6C

FIG.6D